(19) Europäisches Patentamt

European Patent Office

Office européen des brevets

(11) Veröffentlichungsnummer: **0 339 388 B1**

## (12) EUROPÄISCHE PATENTSCHRIFT

(45) Veröffentlichungstag der Patentschrift:
**12.06.91 Patentblatt 91/24**

(21) Anmeldenummer: **89106673.0**

(22) Anmeldetag: **14.04.89**

(51) Int. Cl.⁵: **F16L 33/26, F16L 27/04, F01N 7/08, B60K 13/04**

(54) Anschlussverbindung zwischen einem flexiblen Leitungselement und einem Rohr.

(30) Priorität: **26.04.88 DE 3814004**

(43) Veröffentlichungstag der Anmeldung:
**02.11.89 Patentblatt 89/44**

(45) Bekanntmachung des Hinweises auf die
Patenterteilung:
**12.06.91 Patentblatt 91/24**

(84) Benannte Vertragsstaaten:
**AT BE CH DE ES FR GB IT LI NL SE**

(56) Entgegenhaltungen:
**DE-C- 3 618 234**

(73) Patentinhaber: **Witzenmann GmbH
Metallschlauch-Fabrik Pforzheim
Östliche Karl-Friedrich-Strasse 134
W-7530 Pforzheim (DE)**

(72) Erfinder: **Förster, Walter
Heynlinstrasse 23
W-7535 Königsbach-Stein (DE)**

(74) Vertreter: **Lemcke, Rupert, Dipl.-Ing. et al
Patentanwälte Dipl.-Ing. R. Lemcke Dr.-Ing.
H.J. Brommer Bismarckstrasse 16 Postfach
4026
W-7500 Karlsruhe 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Anschlußverbindung zwischen einem Metallschlauch und einem Rohr, insbesondere bei der Abgasleitung eines Kraftfahrzeuges, wobei die sich überlappenden Teile eines radial außen liegenden, durch Aufweitung des Rohrendes gebildeten Anschlußflansches des Rohres einerseits und eines radial innen liegenden, mit dem Ende des Metallschlauches verbundenen Anschlußflansches des Metallschlauches andererseits entlang einer durch wenigstens eines der Teile gebildeten Kugelfläche aneinanderliegen, deren Mittelpunkt auf der Rohrachse mit geringem axialem Abstand zum Überlappungsbereich angeordnet ist, und wobei die sich überlappenden Flanschteile durch eine im wesentlichen V-förmige Spannschelle in Radial- und Axialrichtung miteinander verspannbar sind, deren die Flanschteile überdekkender Schenkel auf einer Kugelfläche mit dem selben Mittelpunkt wie demjenigen der Flanschteile außen am Anschlußflansch des Rohres anliegt.

Derartige lösbare Anschlußverbindungen dienen im wesentlichen dazu, auftretende Fluchtungsfehler zwischen ankommender und abgehender Rohrleitung auszugleichen, wobei sie insbesondere im Hinblick auf die Eigenschaft des flexiblen Metallschlauches als Verschleißteil beim Auswechseln leicht demontierbar und wieder einbaubar sein sollen. Es geht also darum, einen entlasteten Einbau eines Schlauches zu ermöglichen, wobei z.B. bei Mittenversatz der weiterführenden Rohre dieser nicht allein durch S-förmige Anordnung des Schlauches ausgeglichen werden soll, sondern durch entsprechenden Krümmungsverlauf des Schlauches unter Einbeziehung der Anschlußverbindung, um dem Schlauch eine möglichst große Bewegungsreserve zu belassen und davon nicht bereits einen Teil durch die Anforderungen der Anschlußverbindung zu verbrauchen.

Eine Anschlußverbindung der eingangs genannten Art ist durch die DE-A-31 16 290 bekannt. Dort ist jedoch für die beiden Enden des Metallschlauches in der Verbindung zu dem jeweils weiterführenden Rohr jeweils von unterschiedlichen Konstruktionen ausgegangen, die zumindest für eine der beiden Anschlußverbindungen am dortigen Rohr das Anschweißen eines besonderen Anschlußflansches, also die Verwendung eines zusätzlichen Teiles erfordert.

Darüber hinaus verbindet sich mit der bekannten Bauform der Nachteil, daß sich die jeweilige Anschlußverbindung in Axialrichtung neben dem Metallschlauch an dieses in dessen Verlängerung anschließt, wodurch im Hinblick auf bestimmte Platzverhältnisse die Länge des Metallschlauches beengt und damit dessen Ausgleichswirkung eingeschränkt wird. Anders ausgedrückt baut die bekannte Konstruktion ausgehend von einer bestimmten Ausgleichsfunktion in Axialrichtung verhältnismäßig lang und wirkt sich damit ungünstig auf den erforderlichen Platzbedarf aus.

Insgesamt ist also die bekannte Bauform vergleichsweise besonders platzgreifend und in der Herstellung aufwendig sowie mit der Gefahr einer Beeinträchtigung der Funktionstüchtigkeit verbunden.

Aufgabe der Erfindung ist es daher, eine Anschlußverbindung der eingangs genannten Art derart abzuändern, daß unter Einsatz einer geringst möglichen und außerdem vereinheitlichten Teilezahl eine bezogen auf ein bestimmtes Platzangebot erheblich größere Länge des Metallschlauches möglich ist, wobei insbesondere die Anwendung zusätzlicher, dem Rohr zugeordneter Teile und deren Verbindung mit dem Rohr zugeordneter Teile und deren Verbindung mit dem Rohr vermieden werden soll. Insgesamt soll damit die Funktionstüchtigkeit des Metallschlauches verbessert und dessen Gestaltung als Austauschteil mit leichter Austauschmöglichkeit auch im Sinne einer Vereinheitlichung der zu verwendenden Anschlußverbindungen gefördert werden.

Diese Aufgabe ist erfindungsgemäß dadurch gelöst, daß der durch den Anschlußflansch des Metallschlauches gebildete Flanschteil als in Richtung auf den Metallschlauch umgebördelter bzw. rückgebogener Bund dieses Anschlußflansches ausgebildet ist.

Durch diese gleichermaßen auch auf beide Enden des Metallschlauches anwendbare Maßnahme ist in verblüffend einfacher Weise die Reduktion auf ein Minimum von einheitlichen, zusätzlich zu dem Metallschlauch und den Rohren zu verwendeten Teilen erreicht, wobei die jeweiligen Rohrenden nur noch der jeweiligen radialen Aufweitung zur Bildung der übergreifenden Kugelfläche bedürfen, also an den Rohrenden keine zusätzlichen Teile mehr angebracht werden müssen.

Andererseits ist durch die Gestaltung des jeweiligen Anschlußflansches des Metallschlauches der Verbindungsbereich zwischen Rohr und Metallschlauch praktisch auf den Längenbereich des Metallschlauches verlegt, indem die Anschlußverbindung das jeweils zugeordnete Schlauchende umgibt. Dadurch wird die mögliche Länge des Metallschlauches durch die Anschlußverbindung nicht eingeschränkt, vielmehr in doppelter Weise genutzt, so daß entweder bezogen auf eine bestimmte Länge eines Metallschlauches der erforderliche Platzbedarf vorort reduziert werden kann oder aber ausgehend von einem bestimmten zur Verfügung stehenden Einbauraum die Länge des Metallschlauches vergrößert werden kann, wodurch sich eine erhebliche Steigerung der durch den Metallschlauch zu erzielenden Ausgleichswirkung bzw. dessen Bewegungsreserve erreichen läßt.

Wie praktische Erfahrungen gezeigt haben, ermöglicht der Gegenstand der Erfindung vergleichsweise entweder eine in Axialrichtung des Metallschlauches gemessene Reduzierung des Einbauraumes um etwa 30 % oder aber unter Beibehaltung eines bestimmten Einbauraumes einer Verlängerung des Metallschlauches um einen vergleichbaren Betrag.

Schließlich ist die für beide Seiten des Metallschlauches verwendbare Anschlußverbindung derart vereinfacht und vereinheitlicht, daß der Metallschlauch in Richtung auf ein billiges und einfaches Austauschteil geführt ist, dessen Bauweise in besonderer Art eine allgemeine Vereinheitlichung ermöglicht.

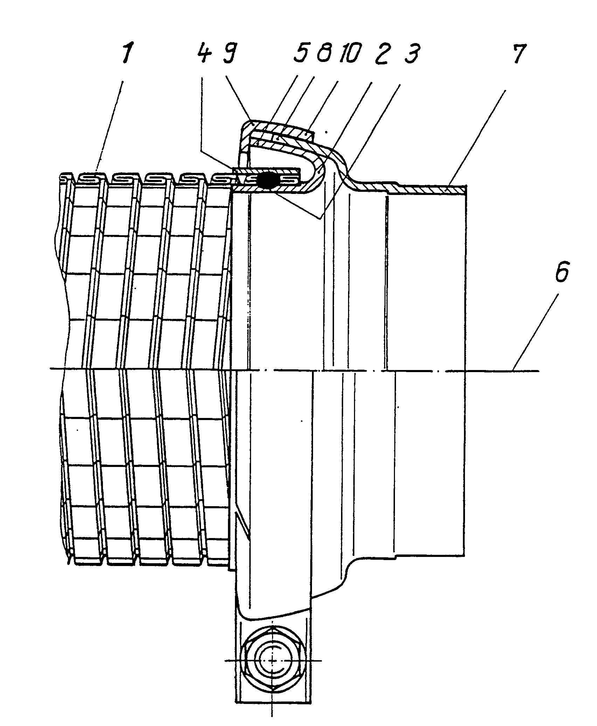

Weitere erfindungswesentliche Merkmale und Einzelheiten ergeben sich aus der nachfolgenden Beschreibung einer Ausführungsform einer Anschlußverbindung, die auf der Zeichnung in teilweisem Axialschnitt vereinfacht dargestellt ist.

Die Zeichnung zeigt einen flexiblen Metallschlauch 1 in allgemeiner Darstellung, wobei dieser beispielsweise ein Metallwellschlauch oder aber auch ein aus einem Metallband durch schraubengangförmiges Wickeln und Ineinandergreifen benachbarter Bandkanten hergestellter Agraffschlauch sein kann.

Am Ende des Metallschlauches 1 ist ein Anschlußflansch 2 eingesetzt und durch eine Schweißung 3 mit dem Metallschlauch 1 verbunden, wobei eine außen aufgesetzte Hülse 4, die ebenfalls durch die Schweißverbindung 3 miterfaßt sein kann, der äußeren Fassung und Fixierung des Metallschlauches 1 dient.

Der Anschlußflansch 2 ist endständig in Richtung auf den Metallschlauch 1 zu einem Flanschteil 5 umgebördelt bzw. abgebogen, das zumindest auf seiner Außenseite eine Kugelfläche bildet, deren Mittelpunkt auf der gemeinsamen Achse 6 von Rohr 7 und Metallschlauch 1 mit geringem axialen Abstand zur Lage des Flanschteiles 5 angeordnet ist.

Auf der Außenfläche des Flanschteiles 5 liegt der am Ende des Rohres 7 durch radiale Aufweitung gebildete Flanschteil 8 über eine in dessen Innerem entsprechend ausgebildete Kugelfläche an, wobei diese Anlage zur Herstellung einer ausreichend dichten Verbindung gegenüber dem im Metallschlauch und dem Rohr geführten Medium ausreicht. Bezüglich des Flanschteiles 8 besteht auch die Möglichkeit, dieses als Kegelstumpf bzw. konisch auszubilden.

Umfangen wird diese Verbindung durch eine im axialen Querschnitt V-förmige Spannschelle 9, deren die Flanschteile 5, 8 überdeckender Schenkel 10 auf einer Kugelfläche mit demselben Mittelpunkt wie demjenigen der Flanschteile 5, 8 am Anschlußflansch des Rohres 7 anliegt.

Wie ersichtlich, ist die Verbindung zwischen Metallschlauch 1 und Rohr 7 über die Flanschteile 5, 8 in Grenzen schwenkbar, so daß eine Justierung möglich ist, bevor die Klemmschelle 9 angespannt und damit die Anschlußverbindung festgelegt wird.

Die öffenbare Ausbildung der Klemmschelle 9 ist an sich bekannt und wird hier nicht weiter erläutert und dargestellt.

Denkt man sich die in der Zeichnung dargestellte Anschlußverbindung auf beiden Seiten des Metallschlauches 1, so wird deutlich, daß für einen Metallschlauch 1 eine einfache und äußerst platzsparende Anschlußtechnik in einer für beide Enden des Metallschlauches 1 gleicher Weise geschaffen ist, die bezüglich der Ausbildung der Enden der jeweiligen Rohre 7 keine zusätzlichen Teile oder Schweißarbeiten erfordert, vielmehr lediglich die endständige Aufweitung des Rohres 7 zur Bildung des kugelförmigen Teiles 8 nötig macht.

## Ansprüche

1. Anschlußverbindung zwischen einem Metallschlauch und einem Rohr, insbesondere bei der Abgasleitung eines Kraftfahrzeuges, wobei die sich überlappenden Teile eines radial außen liegenden, durch Aufweitung des Rohrendes gebildeten Anschlußflansches des Rohres einerseits und eines radial innenliegenden, mit dem Ende des Metallschlauches verbundenen Anschlußflansches des Metallschlauches andererseits entlang einer durch wenigstens eines der Teile gebildeten Kugelfläche aneinanderliegen, deren Mittelpunkt auf der Rohrachse mit geringem axialem Abstand zum Überlappungsbereich angeordnet ist, und wobei die sich überlappenden Flanschteile durch eine im wesentlichen V-förmige Spannschelle in Radial- und Axialrichtung miteinander verspannbar sind, deren die Flanschteile überdeckender Schenkel auf einer Kugelfläche mit demselben Mittelpunkt wie demjenigen der Flanschteile außen am Anschlußflansch des Rohres anliegt, dadurch gekennzeichnet, daß der durch den Anschlußflansch (2) des Metallschlauches (1) gebildete Flanschteil (5) als in Richtung auf den Metallschlauch umgebördelter bzw. rückgebogener Bund dieses Anschlußflansches ausgebildet ist.

2. Anschlußverbindung nach Anspruch 1, dadurch gekennzeichnet, daß der Metallschlauch (1) an beiden Enden mit einem Flanschteil (5) in Form einer auf den Metallschlauch umgebördelten bzw. rückgebogenen Bundes versehen ist.

## Claims

1. Connective coupling between a metallic hose and a pipe, especially in the exhaust conduit of a motor vehicle, wherein the overlapping parts consist, on the one hand, of a radially outwardly disposed connection flange of the pipe formed by widening the pipe end and, on the other hand, of a connecting flange of the metallic hose which is radially inwardly disposed and is connected with the end of the metallic hose, the overlapping parts bearing against one another along a spherical surface which is formed by at least one of the parts and the centre point of which is arranged on the axis of the pipe with a short axial spacing from the region of overlap, and wherein the overlapping flange parts are tightenable to one another in the radial and axial directions by a substantially V-shaped tightener clip of which the shank covering over the flange parts rests on a spherical surface having the same centre point as that of the flange parts externally on the connection flange of the pipe,
characterised in that
the flange part (5) formed by the connecting flange (2) of the metallic hose (1) is formed as a collar of this connecting flange, crimped over and/or bent back in the direction towards the metallic hose.

2. Connective coupling according to claim 1, characterised in that
the metallic hose (1) is provided at both ends with a flange part (5) in the form of a collar crimped over and/or bent back on to the metallic hose.

## Revendications

1. Raccordement entre un élément de conduite flexible métallique et un tuyau, notamment pour la conduite d'échappement d'un véhicule automobile, les parties en recouvrement, d'une part d'une bride de raccordement du tuyau située radialement à l'extérieur et formée par un élargissement de l'extrémité du tuyau, et d'autre part d'une bride de raccordement du flexible métallique située radialement à l'intérieur et assemblée à l'extrémité du flexible métallique, s'appliquant l'une contre l'autre le long d'une surface sphérique qui est formée par au moins une de ces parties et dont le centre est disposé sur l'axe du tuyau à faible distance axiale de la région de recouvrement, et les parties de brides en recouvrement pouvant être conjointement serrées dans le sens radial et dans le sens axial par un collier de serrage sensiblement en forme de V, dont la branche qui recouvre les parties de brides s'applique extérieurement contre la bride de raccordement du tuyau, sur une surface sphérique de même centre que la surface sphérique des parties de brides, caractérisé en ce que la partie de bride (5), formée par la bride de raccordement (2) du flexible métallique (1), est réalisée sous la forme d'un collet de cette bride qui est rabattu ou encore recourbé en direction du flexible métallique.

2. Raccordement selon la revendication 1, caractérisé en ce que le flexible métallique (1) est muni à ses deux extrémités d'une partie de bride (5) sous la forme d'un collet rabattu ou encore recourbé sur le flexible métallique.